# EUROPEAN PATENT SPECIFICATION

(11) **EP 3 096 611 B1**
(45) Date of publication and mention of the grant of the patent: **07.08.2024**
(21) Application number: 15740710.7
(22) Date of filing: 23.01.2015
(51) Int. Cl.: A01K 59/06, B30B 9/14, C11B 1/10, A01K 59/04

(54) **STRUCTURE OF THE FILTER ASSEMBLY OF A BEESWAX SEPARATION SCREW**
STRUKTUR DER FILTERANORDNUNG EINER BIENENWACHSTRENNSCHRAUBE
STRUCTURE D'ENSEMBLE FILTRE DE VIS DE SÉPARATION DE CIRE D'ABEILLE

(30) Priority: 24.01.2014 FI 20140012
(43) Date of publication of application: 30.11.2016
(73) Proprietor: Paradise Honey OY, 06530 Porvoo (FI)
(72) Inventor: VAARA, Juhani, 06530 Porvoo (FI)
(74) Representative: Heinonen & Co
(86) International application number: PCT/FI2015/000004
(87) International publication number: WO 2015/110699

(56) References cited:
- WO-A1-03/047337
- WO-A1-03/047337
- WO-A1-2012/102627
- WO-A1-2012/102627
- WO-A1-2012/102627
- WO-A1-83/00306
- US-A- 1 527 911
- US-A- 2 442 818
- US-A- 3 982 483
- US-A- 4 328 743
- US-A- 4 328 743
- US-A- 5 715 747
- US-A- 5 715 747

## Description

### TECHNICAL FIELD

The present invention relates to a filter assembly for a beeswax separation screw device according to the preamble part of claim 1, to be used in a method of beekeeping for separating wax and honey of the honeycombs built by bees, so that in the end of the separation process the filtered honey contains the least amount possible of beeswax. To carry out this process a beeswax separation screw can be used, for which a new structure for a filter assembly is hereby invented. This improvement significantly facilitates the tailoring of the beeswax separation screw for different varieties of honey and its compositions, and the maintenance and cleansing of the present beeswax separation screw compared to the traditional structure of the beeswax screw presented in the publication US5715747A.

A further beewax separation screw device of the related art is known from the Honey and Wax Pressing System P1000 of Paradise Honey Ltd, Finland, depicted in the Paradise Honey Combining Nature and Technology Catalog 2013.

### BACKGROUND AND KNOWN TECHNOLOGY

After uncapping honeycombs, the collected mixture contains honey and wax, wherefrom the honey must be separated with the help of a beeswax separation screw. In the best-case scenario, the percentage of honey in the separated beeswax is less than one percent. The separation of beeswax from honey can be made beneficially in the following way: the mixture of honey and beeswax is poured into a hopper cone of the beeswax separation screw to an open, cylindrical filter pipe underneath it. There is a rotating, screw-like compressing part inside the filter pipe. The compressing part moves the mixture of honey and beeswax forward in the tube. The diameter of the core in the spiral of the compressing part becomes larger and the pitch of the spiral increases toward its end, so that the space for the mixture of wax and honey becomes smaller as the mixture moves forward in the filter pipe, where the pressure of the mixture increases toward the end of the pipe. Because of the increasing pressure, honey is squeezed through the little holes of the filter pipe and pours into a honey tank. At the same time, squeezed dry beeswax exits from the end of the beeswax separation screw as a continuous spiral.

The traditional beeswax separation screw presented in the publication US5715747A, has an area underneath the hopper cone, parallel to its longitudinal axis, which is called a feed zone, and the back end of the separation screw, parallel to its longitudinal axis, is called a compression zone. If the filter component has been damaged or it has to be removed for example for maintenance, is this removal of the component rather difficult and, in case of damage, replacing the whole filter pipe component is often necessary. Moreover, it is often necessary to filter different varieties of honey having a different viscosity with the same beeswax separation screw. For this, it would be practical to effortlessly change the filter component that corresponds the best for each honey type to ensure the best result possible. The filter component of the traditional beeswax separation screw cannot be changed, and therefore several beeswax separation screws according to the variety of honey and sometimes for crystallized honey as well, would be needed to ensure the optimal separation result.

### SUMMARY OF THE INVENTION

The aim of this invention is a new filter assembly for a beeswax separation screw device, characterized by the characterizing part of the claim 1, with a structure of the filter assembly of the beeswax separation screw that separates honey from wax and allows an easy maintenance of the filter and also enables changing the components of the filter when needed. This new structure of the filter assembly of the beeswax separation screw enables thereby that with a single beeswax separation screw both different varieties of honey and partially also the crystallized honey can be filtered. The use of an optimal filter for each honey variety in the beeswax separation screw means, in other words, that more honey is collected than by using a traditional beeswax separation screw. By an optimal filter component is meant the optimal size and shape of the filtering holes of the filter component and the optimal spacing of the filtering holes.

According to an embodiment of the invention, the beeswax separation screw device according to an embodiment is comprising in the filter assembly cylindrical filter components as optimal filter components comprising filtering holes of the filter component with optimal size, shape and spacing of said filtering holes of the cylindrical filter component being adapted according to a honey variety.

According to an embodiment of the invention an embodied method of separating beeswax, comprises:
- feeding mixture of beeswax and honey to a beeswax separation screw device, wherein the method comprises
- optimizing the cylindrical filter components by changing cylindrical filter components according to the honey variety in the mixture of beeswax and honey, and
- compressing said mixture of beeswax and honey by a beeswax separation screw device according to an embodiment.

According to an embodied use of an ensemble of cylindrical filter components of the beeswax separation screw device according to an embodiment, in honey separation from the beeswax and honey mixture, said ensemble comprises a first cylindrical filter component, a second cylindrical filter component and a third cylindrical filter component, to form a one solid filter from said first, second and third cylindrical filter components when attached to each other by flanges and bolts, so that said one solid filter comprises said first and second cylindrical filter components or said first, second and third cylindrical filter component, said one solid filter being attached to the body by said first cylindrical filter component. The new structure of the filter assembly that separates honey from wax comprises several filter components that are installed closely one after the other. One of these filter components consists of cross-sectionally round, cylindrical filter pipes, to the both ends of which flanges are mounted for tight installation. There are small holes on the filter pipe for squeezing the filtered honey out. The filter components are mounted one after the other and installed tightly against each other with the help of bolts so that the flanges of the opposite filter components are placed against each other. Counted from the mounting surface of the body and the filter, the other end of the first filter component is attached to the body of the beeswax separation screw by bolts and is therefore removable and exchangeable if needed.

Characteristic to one implementation example of the present invention is that the filter assembly of the beeswax separation screw composes of three filter components, from which the first one is open at its top and is located under the feed hopper and this part comprises the whole feed zone. The second filter component comprises the beginning of the compression zone and third filter component the end of the compression zone.

Characteristic to one beneficial implementation example of the present invention is that the filter assembly of the beeswax separation screw composes of two filter components, the first one of which is open at its top and is located under the feed hopper and this component comprises the whole feed zone. The second component extends over the whole length of the compression zone.

### BRIEF DESCRIPTION OF DRAWlNGS

in the following the invention is described more in detail with a beneficial implementation example illustrated on the accompanying drawing, wherein:

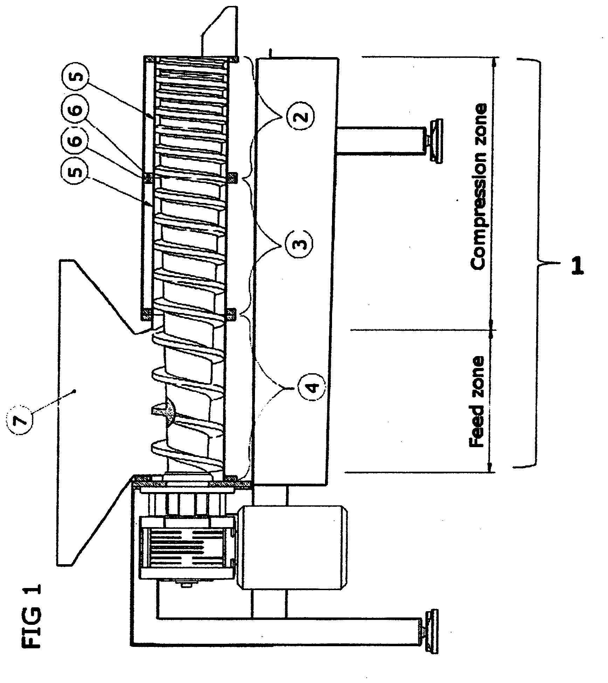

FIG 1: A section view of the beeswax separation screw and the structure of the new filter assembly for beeswax. In the hereby illustrated implementation example, the filter assembly of the beeswax separation screw composes of three filter components.

### DETAILED DESCRIPTION OF INVENTION

The figure FIG 1 shows the present invention of the new structure of the filter assembly of the beeswax separation screw 1 that comprises cylindrical filter components 2,3,4 attached to each other one after the other. One of these cylindrical filter components composes of a cylindrical filter pipe 5, at the ends of which there are mounted flanges 6. The filter components 2, 3 and 4 are tightly attached one after the other with bolts so that the opposite flanges of the filter components 2, 3, 4 mounted one after the other settle against each other. The first filter component 4 of the structure 1 is open at its top under the feed hopper 7 and the following filter components 3 and 2 are closed, the sides of said filter components 2,3 and 4 having small holes on them, through which the increasing pressure forces the honey out. The other end of the filter component 4 is mounted to the body of the beeswax separation screw with bolts. The structure 1 is beneficial also when composed of only two filter components 4 and 2, mounted one after the other, in case of which the filter component 4 comprises the whole length of the compression zone.

## Claims

1. A filter assembly for a beeswax separation screw configured to separate honey from beeswax,
wherein the filter assembly comprises a plurality of filter
components (2, 3, 4) consisting of cylindrical filter pipes (5) having flanges (6) at both ends;
wherein the cylindrical filter pipes (5) comprise filtering holes configured for squeezing, in use, the filtered honey out;
wherein the plurality of filter components (2, 3, 4) are attached to each other by bolts with the flanges (6) of opposite filter components (2, 3, 4) placed against each other;
wherein a first filter component (4) is open at its top; and
wherein the flanges (6) of one end of the first filter component (4) are removably attachable with bolts to a body of the beeswax separation screw.

2. A beeswax separation screw configured to separate honey from beeswax comprising:
a rotating screw-like compression part;
a body;
a feed hopper (7):
a filter assembly according to claim 1;
wherein the open top of the first filter component (4) of the filter assembly is located under the feed hopper (7) and
wherein the flanges (6) of one end of the first filter component (4) are removable fastened with bolts to the body:
wherein the screw-like compressing part is arranged inside the cylindrical filter pipes (5):
wherein the screw-like compressing part is configured to move a mixture of honey and beeswax forward in the cylindrical filter pipes (5);
wherein the diameter of a core in the spiral of the screw like compressing part becomes larger and the pitch of the spiral increase towards its end,
so that a space for the mixture of beeswax and honey becomes smaller as, in use, the mixture moves forward in the cylinder filter pipes (5), so that the pressure of the mixture increases toward the end of the pipe to squeeze honey through the filtering holes of the cylindrical filter pipes (5) and pours into a honey tank, and so that squeezed dry beeswax exits from the end of the beeswax separation screw as a continuous spiral.

3. A beeswax separation screw according to claim 2, **wherein** the filter assembly comprises two filter components (2, 3, 4), the first filter component (4) forming a feed zone of the beeswax separation screw, and a second filter component (2, 3) forming a compression zone of the beeswax separation screw.

4. A beeswax separation screw according to claim 2, **wherein** the filter assembly comprises three filter components (2, 3, 4), the first filter component (4) forming a feed zone of the beeswax separation screw, and a second and third filter components (2, 3) forming a compression zone of the beeswax separation screw.

5. A method of separating beeswax and honey of honeycombs built by bees, comprising:
- providing a beeswax separation screw according to claim 2;
- optimizing the cylindrical filter components by changing cylindrical filter components according to the honey variety in the mixture of beeswax and honey,
- feeding mixture of beeswax and honey of honeycombs built by bees to the feed hopper (7) of the beeswax separation screw, and
- moving the mixture of honey and beeswax forward in the cylindrical filter pipes (5) of the beeswax separation screw by the screw-like compressing part arranged inside the cylindrical filter pipes (5);
**wherein** the diameter of a core in the spiral of the screw-like compressing part becomes larger and the pitch of the spiral increases toward its end,
so that a space for the mixture of beeswax and honey becomes smaller as the mixture moves forward in the cylinder filter pipes (5), so that the pressure of the mixture increases toward the end of the pipe to squeeze honey through the filtering holes of the cylindrical filter pipes (5) and pours into a honey tank, and so that squeezed dry beeswax exits from the end of the beeswax separation screw as a continuous spiral.

6. Use of the filter assembly according to claim 1 in a beeswax separation screw for separating beeswax and honey of honeycombs built by bees.

## Patentansprüche

1. Filteranordnung für eine Bienenwachsabscheideschnecke, die so konfiguriert ist, dass sie Honig von Bienenwachs trennt, wobei die Filteranordnung mehrere Filterkomponenten (2, 3, 4) umfasst, die aus zylindrischen Filterrohren (5) mit Flanschen (6) an beiden Enden bestehen;
wobei die zylindrischen Filterrohre (5) Filterlöcher umfassen, die so konfiguriert sind, dass sie bei der Verwendung den gefilterten Honig herausdrücken;
wobei die mehreren Filterkomponenten (2, 3, 4) durch Bolzen aneinander befestigt sind, wobei die Flansche (6) von gegenüberliegenden Filterkomponenten (2, 3, 4) gegeneinander angeordnet sind;
wobei eine erste Filterkomponente (4) an ihrer Oberseite offen ist; und
wobei die Flansche (6) eines Endes der ersten Filterkomponente (4) mit Bolzen an einem Körper der Bienenwachsabscheideschnecke abnehmbar befestigt werden können.

2. Bienenwachsabscheideschnecke, die so konfiguriert ist, dass sie Honig von Bienenwachs trennt, umfassend:
ein rotierendes schraubenartiges Kompressionsteil;
einen Körper;
einen Einlauftrichter (7):
eine Filteranordnung nach Anspruch 1;
wobei die offene Oberseite der
ersten Filterkomponente (4) der Filteranordnung sich unter dem Einlauftrichter (7) befindet und wobei die Flansche (6) eines Endes der ersten Filterkomponente (4) mit
Bolzen an dem Körper abnehmbar befestigt sind:
wobei der schraubenartige Kompressionsteil im Inneren der zylindrischen Filterrohre (5) angeordnet ist:
wobei der schraubenartige Kompressionsteil so konfiguriert ist, dass er ein Gemisch aus Honig und Bienenwachs in den zylindrischen Filterrohren (5) vorwärts bewegt;
wobei der Durchmesser eines Kerns in der Spirale des schraubenartigen Kompressionsteils größer wird und die Steigung der Spirale zu ihrem Ende hin zunimmt, so dass ein Raum für das Gemisch aus Bienenwachs und Honig kleiner wird, wenn sich das Gemisch im Gebrauch in den zylindrischen Filterrohren (5) vorwärts bewegt, so dass der Druck des Gemischs zum Ende des Rohrs hin zunimmt, um Honig durch die Filterlöcher der zylindrischen Filterrohre (5) zu pressen und in einen Honigtank zu gießen, und so dass gepresstes trockenes Bienenwachs aus dem Ende der Bienenwachsabscheideschnecke als kontinuierliche Spirale austritt.

3. Bienenwachsabscheideschnecke nach Anspruch 2, **wobei** die Filteranordnung zwei Filterkomponenten (2, 3, 4) umfasst, wobei die erste Filterkomponente (4) eine Einlaufzone der Bienenwachsabscheideschnecke bildet, und eine zweite Filterkomponente (2, 3) eine Kompressionszone der Bienenwachsabscheideschnecke bildet.

4. Bienenwachsabscheideschnecke nach Anspruch 2, **wobei** die Filteranordnung drei Filterkomponenten (2, 3, 4) umfasst, wobei die erste Filterkomponente (4) eine Einlaufzone der Bienenwachsabscheideschnecke bildet, und eine zweite und dritte Filterkomponente (2, 3) eine Kompressionszone der Bienenwachsabscheideschnecke bilden.

5. Verfahren zur Trennung von Bienenwachs und Honig aus von Bienen gebauten Waben, umfassend:
- Bereitstellen einer Bienenwachsabscheideschnecke nach Anspruch 2;
- Optimieren der zylindrischen Filterkomponenten durch Austausch der zylindrischen Filterkomponenten entsprechend der Honigsorte im Gemisch aus Bienenwachs und Honig,
- Einfüllen eines Gemischs aus Bienenwachs und Honig aus von Bienen gebauten Waben in den Einlauftrichter (7) der Bienenwachsabscheideschnecke, und
- Vorwärtsbewegen des Gemischs aus Honig und Bienenwachs in den zylindrischen Filterrohren (5) der Bienenwachsabscheideschnecke durch den schraubenartigen Kompressionsteil, der innerhalb der zylindrischen Filterrohre (5) angeordnet ist;
**wobei** der Durchmesser eines Kerns in der Spirale des schraubenartigen Kompressionsteils größer wird und die Steigung der Spirale zu ihrem Ende hin zunimmt, so dass ein Raum für das Gemisch aus Bienenwachs und Honig kleiner wird, wenn sich das Gemisch in den zylindrischen Filterrohren (5) vorwärts bewegt, so dass der Druck des Gemischs zum Ende des Rohrs hin zunimmt, um Honig durch die Filterlöcher der zylindrischen Filterrohre (5) zu pressen und in einen Honigtank zu gießen, und so dass gepresstes trockenes Bienenwachs aus dem Ende der Bienenwachsabscheideschnecke als kontinuierliche Spirale austritt.

6. Verwendung der Filteranordnung nach Anspruch 1 in einer Bienenwachsabscheideschnecke zum Trennen von Bienenwachs und Honig aus von Bienen gebauten Honigwaben.

## Revendications

1. Ensemble filtrant destiné à une vis de séparation de cire d'abeille configurée pour séparer le miel de la cire d'abeille dans lequel l'ensemble filtrant comporte une pluralité d'éléments filtrants (2, 3, 4) constitués de tuyaux filtrants cylindriques (5) munis de brides (6) aux deux extrémités ;
dans lequel les tuyaux filtrants cylindriques (5) comportent des orifices de filtration configurés pour presser, pendant l'utilisation, le miel filtré ;
dans lequel les différents éléments filtrants (2, 3, 4) sont fixés les uns aux autres par des boulons à l'aide de brides (6) d'éléments filtrants opposés (2, 3, 4) placés les uns contre les autres ;
dans lequel le premier élément filtrant (4) est ouvert dans la partie supérieure ; et
dans lequel les brides (6) d'une extrémité du premier élément filtrant (4) peuvent être fixées de manière amovible à l'aide de boulons à un corps de la vis de séparation de cire d'abeille.

2. Vis de séparation de cire d'abeille configurée pour séparer le miel de la cire d'abeille comprenant : :
une partie de compression rotative en forme de vis ;
un corps ;
une trémie d'alimentation (7) :
un ensemble filtrant selon la revendication 1 ;
dans lequel la partie supérieure ouverte du premier élément filtrant (4) de l'ensemble filtrant est située sous la trémie d'alimentation (7) et
dans lequel les brides (6) d'une extrémité du premier élément filtrant (4) sont fixées de manière amovible au corps à l'aide de boulons :
dans lequel la partie de compression en forme de vis est disposée à l'intérieur des tuyaux filtrants cylindriques (5) :
dans lequel la partie de compression en forme de vis est configurée pour déplacer le mélange de miel et de cire d'abeille dans les tuyaux filtrants (5) ;
dans lequel le diamètre d'un coeur dans la spirale de la partie de compression en forme de vis s'élargit et le pas de la spirale augmente vers l'extrémité,
de sorte qu'un espace occupé par le mélange de cire d'abeille et de miel se réduit, pendant l'utilisation, au fur et à mesure que le mélange avance dans les tuyaux cylindriques filtrants (5), de sorte que la pression du mélange augmente vers l'extrémité du tuyau pour presser le miel à travers les orifices de filtration des tuyaux cylindriques filtrants (5) et le déverse dans un réservoir de miel, et
de sorte que la cire d'abeille sèche pressée sorte par l'extrémité de la vis de séparation de cire d'abeille en forme de spirale continue.

3. Vis de séparation de cire d'abeille selon la revendication 2, **dans laquelle** l'ensemble filtrant comprend deux éléments filtrants (2, 3, 4), le premier élément filtrant (4) formant une zone d'alimentation de la vis de séparation de cire d'abeille, et le deuxième élément filtrant (2, 3) formant une zone de compression de la vis de séparation de cire d'abeille.

4. Vis de séparation de cire d'abeille selon la revendication 2, **dans laquelle** l'ensemble filtrant comprend trois éléments filtrants (2, 3, 4), le premier élément filtrant (4) formant une zone d'alimentation de la vis de séparation de cire d'abeille, et le deuxième et le troisième éléments filtrants (2, 3) formant une zone de compression de la vis de séparation de cire d'abeille.

5. Procédé de séparation de cire d'abeille et de miel des nids d'abeille construits par les abeilles, consistant à : :
- fournir une vis de séparation de cire d'abeille selon la revendication 2 ;
- optimiser les éléments du filtre cylindrique en changeant les composants du filtre cylindrique selon la variété de miel dans le mélange de cire d'abeille et de miel,
- alimenter en mélange de cire d'abeille et de miel des nids-d'abeilles construits para les abeilles la trémie d'alimentation (7) de la vis de séparation de la cire d'abeille, et
- déplacer le mélange de miel et de cire d'abeille dans les tuyaux filtrants cylindriques (5) de la vis de séparation de cire d'abeille dans la partie de compression en forme de vis prévue à l'intérieur des tuyaux filtrants cylindriques (5) ;
**dans laquelle** le diamètre d'un coeur dans la spirale de la partie de compression en forme de vis s'élargit et le pas de la spirale augmente vers son extrémité,
de sorte qu'un espace occupé par le mélange de cire d'abeille et de miel se réduit au fur et à mesure que le mélange avance dans les tuyaux cylindriques filtrants (5), de sorte que la pression du mélange augmente vers l'extrémité du tuyau pour presser le miel à travers les orifices de filtration des tuyaux cylindriques filtrants (5) et le déverse dans un réservoir de miel, et de sorte que la cire d'abeille sèche pressée sorte par l'extrémité de la vis de séparation de cire d'abeille sous forme de spirale continue.

6. Utilisation de l'ensemble filtrant selon la revendication 1 dans une vis de séparation de la cire d'abeille destinée à séparer la cire d'abeille et le miel des nids d'abeilles.
